# EUROPÄISCHE PATENTSCHRIFT

(11) **EP 1 844 873 B1**
(45) Veröffentlichungstag und Bekanntmachung des Hinweises auf die Patenterteilung: **14.09.2011**
(21) Anmeldenummer: 06007482.0
(22) Anmeldetag: 10.04.2006
(51) Int. Cl.: B21D 49/00

(54) **Verfahren zum Versteifen eines Hohlprofils wie eines umfänglich geschlossenen Hohlprofils eines Kfz-Bauteils**
Method for stiffening a hollow profile, such as a circumferentially closed hollow profile for a vehicle construction part
Méthode de rigidification d'un profilé creux, comme un profilé creux fermé circonférentiellement pour une pièce de construction d'un véhicule

(43) Veröffentlichungstag der Anmeldung: 17.10.2007
(73) Patentinhaber: INPRO Innovationsgesellschaft für fortgeschrittene Produktionssysteme in der Fahrzeugindustrie mbH, 10587 Berlin (DE)
(72) Erfinder: Gigengack, Thomas, Dipl.-Ing., 10785 Berlin (DE); Mende, Torsten, Dipl.-Ing., 49688 Lastrup (DE)
(74) Vertreter: Hoffmann, Klaus-Dieter

(56) Entgegenhaltungen:
- WO-A-01/36189
- WO-A-2005/113235
- DE-U1- 9 208 874

## Beschreibung

Die Erfindung betrifft ein Verfahren zum Versteifen eines Hohlprofils, wie eines umfänglich geschlossenen Hohlprofils eines Kfz-Bauteils, bei dem mindestens ein Loch in der Umfangswand des Hohlprofils erzeugt sowie durch das Loch ein Element in das Hohlprofil eingeführt und zwischen den einandergegenüberliegenden Innenflächen der Umfangswand des Hohlprofils zu dessen Versteifung positioniert wird, indem das Element mit dem in das Hohlprofil eingeführten Ende an der zu dem Loch gegenüberliegenden Innenfläche der Umfangswand des Hohlprofils sowie am anderen. Ende am Rand des Lochs des Hohlprofils verschweisst wird, wobei das Loch in der Umfangswand schweissmässig verschlossen wird,

Die Erfindung betrifft weiterhin ein Hohlprofil, wie ein umfänglich geschlossenes Hohlprofil eines Kfz-Bauteils, mit mindestens einem zwischen einandergegenüberliegenden Innenflächen der Umfangswand angeordneten und an den beiden Enden mit der Umfangswand des Hohlprofils verschweissten Element zum Versteifen des Hohlprofils

Im Automobilbau werden zur lokalen Versteifung z.B. in der A- oder B-Säule, im Schweller oder in Achskomponenten aus Hohlprofilen oft Bleche eingeschweißt. Diese Bleche werden üblicherwveise gestanzt und zum Teil später noch in einem Tiefziehverfahren umgeformt. Bei derartigen lokalen Versteifungen können Toleranzprobleme auftreten Bislang werden vorrangig zur Versteifung von Hohlstrukturen Druck- bzw. Wanddickenverstärkungen eingesetzt, da diese fertigungstechnik verhältnismäßig leicht zu realisieren sind

So wird bei einem aus der DE 100 29 467 Cl bekannten Verfahren zur lokalen Versteifen eines umfänglich geschlossenen Hohlprofils an mechanisch hochbelasteten Stellen an dem Umfang des Hohlprofils eine Öffnung ausgebildet und in die Öffnung ein Verstärkungsblech derart eingesteckt, daß es in das Hohlprofil zumindest hineinragt. Anschließend wird das Verstärkungsblech im Bereich des Öffnungsrandes mit dem Hohlprofil gefügt.

Nach der DE 1.03 57 343 B3 2005.06.02 ist weiterhin bekannt, zum Versteifen eines umfänglich geschlossenen Hohlprofils an dessen Umfang eine Öffnung zu erzeugen und anschließend in das Hohlprofilinnere ein Versteifungsbauteil einzubringen und dieses mit der der Öffnung gegenüberliegenden Hohlprofilwandung zu fügen. Ähnliche Versteifungen sind nach der DE-U-9208874 bei Bauplatten bekannt, die aus zwei voneinander parallel beabstandeten plattenförmigen Elementen aus Metall bestehen, wobei wenigstens ein plattenförmiges Element in einem vorbestimmten Raster mit zu dem anderen plattenförmige Element hin offenen Öffnungen versehen ist und im Bereich der Öffnungen metallische starre rohrförmige Elemente vorgesehen sind, die mit den plattenförmigen Elementen aus Metall verschweisst sind.

Aus der DE 196 38 917 ist weiter bekannt, zur Versteifung einer Hohlstruktur zwischen deren Innenwänden zahlreiche nebeneinander angeordnete und fest miteinander verbundene, hohlförmig ausgebildete Tragelemente vorzusehen, die aus wabenförmig Wänden bestehen. Die Längsmittelachsen oder Längsseiten dieser Tragelemente verlaufen im wesentlichen parallel oder quer zu den längs verlaufenden Innenwänden des Hohlkörpers, wobei zumindest zwei gegenüberliegende wabenförmig angeordnete Wände über hohlförmige Verstärkungselemente fest miteinander verbunden sind. Die Längsmittelachsen der Verstärkungselemente sind dabei zur Längsmittelachse des Tragelementes winklig angeordnet. Die einzelnen Tragelemente sind in mehreren Lagen übereinander angeordnet und füllen den Innenraum des Hohlkörpers aus.

Aus der WO 2005/113236 A1 ist auch eine Verfahren zum Versteifen eines sandwichartigen Verbundes aus zwei zueinander parallelen Platten mit einem zwischen diesen positionierten Kern aus Kunststoff oder Polymermaterial bekannt, bei dem in die erste Platte mindestens ein Loch gebohrt wird, durch das anschliessend ein starrer Stiftbolzen aus Metall eingeführt, durch den Kern bis zur gegenüberliegenden zweiten Platte getrieben und dann an der Innenfläche letzterer mit dem eingeführten Endes sowie am gegenüberliegenden Ende mit dem Rand des Loches in der ersten Platte zur Versteifung des Verbundes verschweisst wird.

Ziel der Erfindung ist es, eine effektive und kostengünstige Versteifung von Hohlstrukturen wie von umfänglich geschlossenen und stark belasteten Hohlprofden von Kfz-Bauteilen zu ermöglichen, wobei eine Verformung des Hohlprofilquerschnitts verhindert werden soll Der Erfindung liegt daher die Aufgabe zugrunde, ein Verfahren und ein Hohlprofil der eingangs erwähnten Art zur Verfügung zu stellen, die diesen Anforderungen genügen,

Diese Aufgabe wird erfindungsgemäss dadurch gelöst, dass
- als Element für die Versteifung ein Zugelement vorgegebener Knickfestigkeit verwendet wird,
- wobei das Verschweissen des in das Hohlprofil eingeführten Endes des Zugelementes auf der zum Loch des Hohlprofils gegenüberliegenden Innenfläche des Hohlprofils mittels eines mit dem Zugelement ausserhalb des Hohlprofils in Kopplung gebrachten Bolzenschweissgerätes bolzenartig erfolgt,
- das Zugelement nach dem Verschweissen seines in das Hohlprofils eingeführten Endes auf der zum Loch gegenüberliegenden Innenflächen des Hohlprofiles von einer an ihm außerhalb des letzteren angreifenden Spann-/Zugeeinrichtung zwischen den einandergegenüberliegenden Innenflächen des Hohlprofils gespannt
- und auf der Außenflächen der Umfangswand des Hohlprofils am Rand des Lochs verschweisst wird,
- worauf die ausserhalb des Hohlprofils befindliche Länge des Zugelementes an dessen Verschweissstelle auf der Außenfläche der Umfangwand des Hohlprofils abgeschnitten wird.

Vorzugsweise wird als Zugelement ein Zugdraht mit einem rohrförmigen oder sternförmigen Querschnitt verwendet. Weiterhin kann für den Zugdraht ein schweissfähiger Werkstoff verwendet werden, der als Rollenwerkstoff bereit gestellt wird. Bevorzugt wird für den Zugdraht Stahl als Material verwendet.

Der knickfeste Zugdraht kann über eine isolierte Fördereinrichtung durch das Loch in der Umfangswand berührungsfrei zu dieser in das Hohlprofil eingeführt werden, um das eingeführte Ende des Zugdrahtes bolzenartig auf der gegenüberliegenden Innenfläche der Umfangswand nach Kopplung des Zugdrahtes mit dem Bolzenschweißgerät zu verschweissen,

Auch kann gegebenenfalls eine Vielzahl Löcher in der Wand des Hohlprofils erzeugt und eine entsprechende Anzahl Zugelemente als Versteifungsstreben zwischen gegenüberliegenden Innenflächen des Hohlprofils gespannt und mit der Umfangswand des Hohlprofils entsprechend einem durch eine Simulationsrechnung ermittelten Versteifüngsmuster für das Hohlprofil verschweisst werden, wobei die Zugelemente parallel und/oder rechtwinklig und/oder schiefwinklig zueinander ausgerichtet verlaufen.

Auch können mehrere Zugelemente in einer Ebene zwischen den gegenüberliegenden Innenflächen des Hohlprofils in paralleler Ausrichtung zueinander als Versteifungsstreben gespannt und mit der Umfangswand des Hohlprofils verschweisst werden.

Die Aufgabe der Erfindung wird auch gelöst durch das eingangs benannte Hohlprofil wie ein umfänglich geschlossenes Hohlprofils eines Kfz-Bauteils, das dadurch gekennzeichnet ist, dass das Element zum Versteifen des Hohlprofils ein zwischen den einandergegenüberliegenden Innenflächen der Umfangswand des Hohlprofils als Versteifungsstrebe gespanntes Zugelement ist, dessen eines Ende mit einer der Innenflächen der Umfangswand des Hohlprofils und dessen anderes Ende (10) gegenüberliegend an der Außenfläche der Umfangswand des Hohlprofils verschweißt sind.

Vorteilhafte Weiterbildungen der erfindungsgemäßen Hohlstruktur sind in den Patentansprüchen 9 bis 12 beschrieben.

Ähnlich wie in der Natur, wobei z.B. bei Bambus, Gräsern, Knochen usw, leichte, hochbelastete, rohrförmig Hohl- und Rohrstrukturen ausschließlich durch Zugelememte verstärkt sind, wird durch die Erfindung eine Verformung des Querschnitts einer Hohlstruktur verhindert und deren Festigkeit dadurch erhöht. Das erfindungsgemäße Verfahren ermöglicht auch eine effektive Versteifung von nur einseitig zugängliche Hohlstrukturen oder Hohlprofile und schafft somit verhältnismäßig einfache und kostengünstige Alternativen der Versteifung insbesondere konventioneller Hohlprofile im Automobilbau, die jedoch bei der Verstellung entsprechend einseitig gelocht sein müssen. Das Vorsehen der lochartigen Öffnung kann bereits beim. Tiefziehen in der Ziehpresse unter Einsatz eines Lochstempels erfolgen. Wird ein Drahtwerkstoff eingesetzt, der als Rollenwerkstoff bereitgestellt wird, so ist ein Richtvorgang bei der Einführung des Zugdrahtes in das Loch in der Umfangswand des hohlprofils erforderlich, damit das durch das Loch in das Hohlprofil eingeführte Ende des Zugdrahtes bis zur gegenüberliegenden Innenfläche der Umfangswand des Hohlprofils geschoben wird. Die Verschweißung des an der Innenfläche der Umfangswand des Hohlprofils bolzenartig verschweißten und von der Spann-/Zugeinrichtung gespannten Zugdrahtes am Lochrand gegenüberliegend auf der Außenfläche der Umfangswand des Hohlprofils kann auch mittels des Bolzenschweißgerätes erfolgen.

Die Erfindung wird nun anhand der Zeichnungen erläutert. In diesen sind:
**Fig. 1a** eine Schnittansicht eines Hohlprofils mit einem in der Umfangswand erzeugten Loch,
**Fig. 1b** eine Schnittansicht eines Details des Hohlprofils der Fig. 1a im Bereich des Lochs der Umfangswand,
**Fig. 2a** eine Schnittansicht des Hohlprofils der Fig. 1a mit einem in das Hohlprofil durch das Loch eingeführten Zugelement, das mit einem Bolzenschweißgerät gekoppelt ist,
Fig. 2b eine Schnittansicht eines Details des Hohlprofils nach Fig. 2a, wobei die Einführung des mit dem Bolzenschweißgerät gekoppelten Zugelementes durch das Loch der Umfangswand verdeutlicht ist,
**Fig. 2c** eine Schnittansicht eines Details des Hohlprofils der Fig. 2a im Bereich der dem Loch gegenüberliegenden Innenfläche der Umfangswand, auf der das eingeführte Ende des Zugelementes bolzenartig verschweißt ist,
**Fig. 3a** eine Schnittansicht des Hohlprofils der Fig. 1a, wobei das am eingeführten Ende verschweißte Zugelement von einer außerhalb des Hohlprofils befindlichen Spann-/ Zugeinrichtung strebenartig gespannt ist,
**Fig. 3b** eine Schnittansicht eines Details des Hohlprofils der Fig. 3a im Bereich des Lochs in der Umfangswand, wobei die Richtung der aufgebrachten Zugkraft sichtbar ist,
**Fig. 3c** eine Schnittansicht des Details des Hohlprofils entsprechend der Fig. 2c,
**Fig. 4a** eine Schnittansicht des Hohlprofils mit fertiggestellter Versteifungsstrebe,
**Fig. 4b** eine Schnittansicht eines Details des Hohlprofils nach Fig. 4a, die die Verschweißstelle des gespannten Zugelementes auf der Außenfläche der Umfangswand nach Abschneiden der außerhalb des Hohlprofils befindlichen Länge des Zugelementes zeigt,
**Fig. 4c** eine Schnittansicht des Details des Hohlprofils entsprechend der Fig. 2c,
**Fig. 5** eine schematische Schnittansicht des Hohlprofils gemäß Fig. 1a mit einer Vielzahl in unterschiedlichen Ebenen als Versteifungsstreben gespannten Zugelementen, die unterschiedlich zueinander ausgerichtet sind.

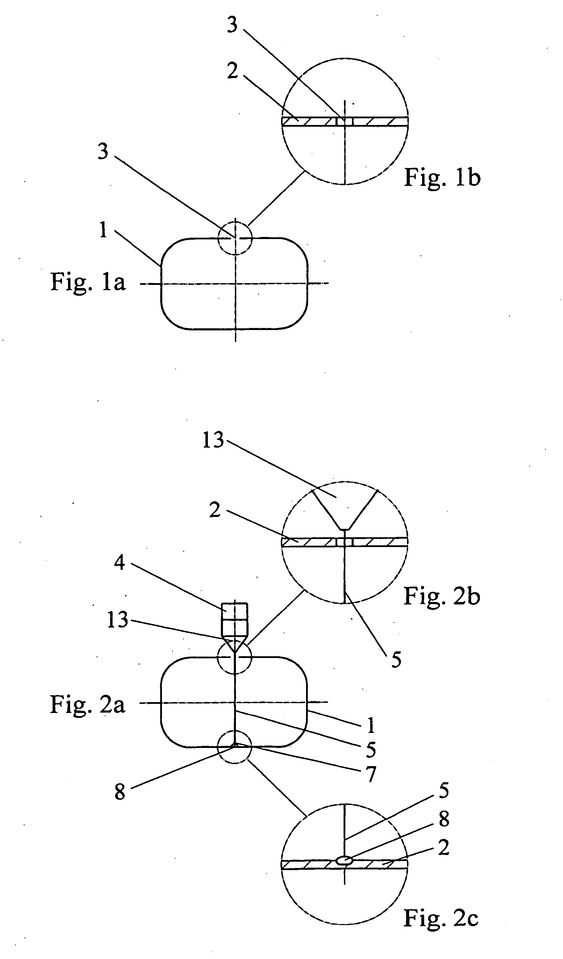

Aus den Fig. 1a bis 4c geht der Ablauf des erfindungsgemäßen Verfahrens zum Versteifen eines Hohlprofils 1 konventioneller Bauweise hervor, wie es häufig im Automobilbau Verwendung findet. Wie Fig.1b zeigt, weist das in Fig. 1a im Schnitt schematisch dargestellte Hohlprofil 1 auf der Rückseite in der Umfangswand 2 ein Loch 3 auf, das beim Tiefziehen in der Ziehpresse bereits erzeugt worden ist.

Zum Versteifen des Hohlprofils 1 wird gemäß Fig. 2b ein mit einem Bolzenschweißgerät 4 gekoppeltes knickfestes Zugelement 5, das vorzugsweise von einem Zugdraht aus Stahl gebildet sein kann, durch das Loch 3 in der Umfangswand 2 in das Innere des Hohlprofils 1 eingeführt und, wie Fig. 2a verdeutlicht, bis zu der dem Loch 3 gegenüberliegenden Innenfläche 6 der Umfangswand 2 vorgeschoben. Am eingeführten Ende 7 wird das Zugelement 5 dann mittels des Bolzenschweißgerätes 4 auf der Innenfläche 6 der Umfangswand 2 des Hohlprofils 1 bolzenartig verschweißt, wie Fig. 2c zeigt.

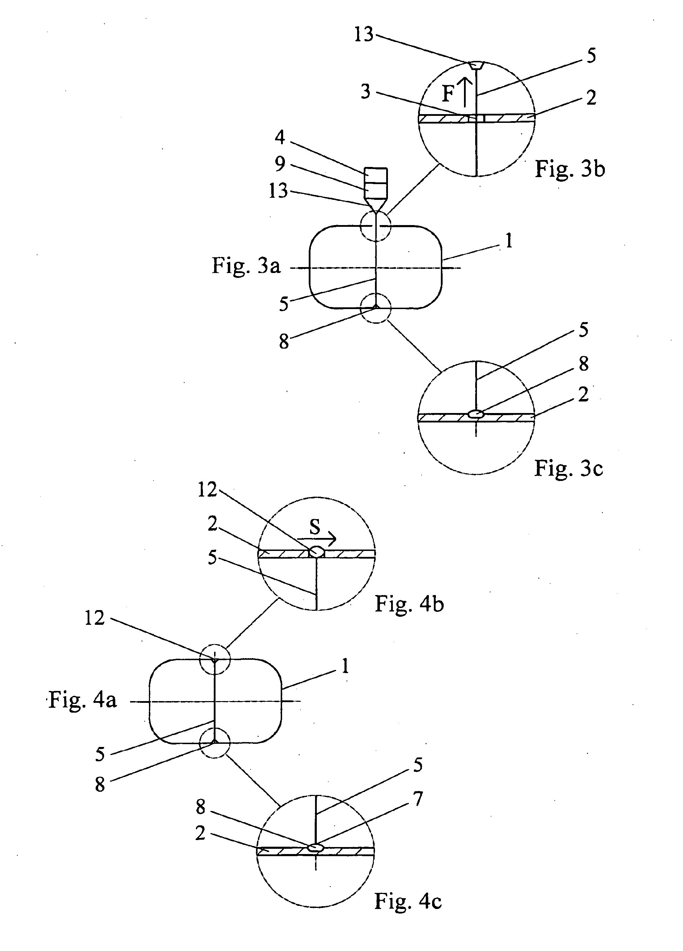

Im nächsten Verfahrensschritt, der aus den Fig. 3a bis 3c ablesbar ist, wird das am eingeführten Ende 7 mit der Innenfläche 6 der Umfangswand 2 an der Verschweißung 8 festgelegte Zugelement 5 mittels einer Spann-/Zugeinrichtung 9, die mit dem Bolzenschweißgerät 4 baulich kombiniert sein kann und außerhalb des Hohlprofils 1 mit dem Zugelement 5 in Eingriff gebracht wird, mit einer von Umfangswand 2 des Hohlprofils senkrecht weg gerichteten Zugkraft (Pfeil F) straff gespannt, wie Fig. 3a und 3b verdeutlichen.

Anschließend wird, wie aus den Fig. 4a und 4b hervorgeht, das gespannte Zugelement 5 auf der das Loch 3 umfassenden Außenfläche 10 der Umfangswand 2 des Hohlprofils 1 derart verschweißt, daß das Loch 3 in der Umfangswand 2 schweißmäßig verschlossen wird (Fig. 4b) und das Zugelement 5 eine Versteifungsstrebe im Inneren des Hohlprofils 1 bildet. Die außerhalb des Hohlprofils 2 verbleibende Länge des Zugelementes 5 wird , wie durch den Pfeil S anzeigt, an der Außenfläche 10 des Umfangswand 2 des Hohlprofils 1 anschließend abgeschnitten, so daß das äußere Ende 11 des die Versteifungsstrebe bildenden Zugelememtes 5 in dessen Verschweißung 12 auf der Außenfläche 10 integriert ist.

Wie die Fig. 2ä und 3a zeigen, kann eine gegenüber dem Hohlprofil 1 isolierte trichterförmige Fördereinrichtung 13, die mit dem Bolzenschweißgerät 4 und der Spann-/Zugeinrichtung 9 baulich kombiniert sein kann, vorgesehen sein, mittels der das knickfeste Zugelement 5 durch das Loch 3 in der Umfangswand 2 berührungsfrei zu dieser in das Hohlprofil 1 einzuführen ist, um mit dem eingeführten Ende 7 bolzenartig an der zum Loch 3 gegenüberliegenden Innenfläche 6 der Umfangswand 2 mittels des mit dem Zugelement 5 außerhalb des Hohlprofils 1 gekoppelten Bolzenschweißgerätes 4 verschweißt zu werden.

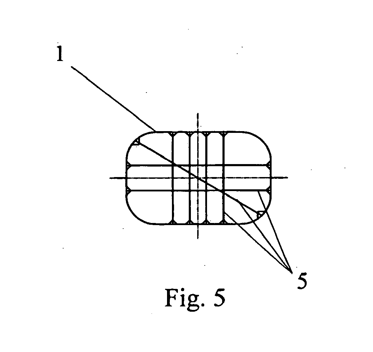

Fig. 5 zeigt, daß vorteilhafterweise auch eine Versteifung des Hohlprofils 1 mit einer Vielzahl Zugelemente 5 möglich ist, die in unterschiedlichen Ebenen im Innern des Hohlprofils Versteifungsstreben bilden, die parallel und/oder rechtwinklig und/oder schiefwinklig zueinander ausgerichtet verlaufen und mit ihren Enden 7 und 11 jeweils wie bei der aus den Fig. 1a bis 4c ersichtlichen Ausführungsform mit der Umfangswand 2 des Hohlprofils 1 verschweißt sind.

### Liste der Bezugszeichen:

- 1: Hohlprofil
- 2: Umfangswand
- 3: Loch, lochartige Öffnung
- 4: Bolzenschweißgerät
- 5: Zugelement, Zugdraht
- 6: Innenfläche der Umfangswand
- 7: eingeführtes Ende des Zugelementes
- 8: Verschweißung auf der Innenfläche
- 9: Spann-/Zugeinrichtung
- 10: Außenfläche der Umfangswand
- 11: Ende des Zugelementes auf der Außenfläche,
- 12: Verschweißung auf der Außenfläche der Umfangswand
- 13: Fördereinrichtung
- Pfeil F: Zugkraft
- Pfeil S: Schnittstelle

## Patentansprüche

1. Verfahren zum Versteifen eines Hohlprofils, wie eines umfänglich geschlossenen Hohlprofils (1) eines Kfz-Bauteils, bei dem mindestens ein Loch (3) in der Umfangswand (2) des Hohlprofils (1) erzeugt sowie durch das Loch (3) ein Element (5) in das Hohlprofil (1) eingeführt und zwischen den einandergegenüberliegenden Innenflächen (6) der Umfangswand (2) des Hohlprofils (1) zu dessen Versteifung positioniert wird, indem das Element (5) mit dem in das Hohlprofil (1) eingeführten Ende (7) an der zu dem Loch (3) gegenüberliegenden Innenfläche (6) der Umfangswand (2) des Hohlprofils (1) sowie am anderen Ende am Rand des Lochs (3) des Hohlprofils (1) verschweißt wird, wobei das Loch (3) in der Umfangswand (2) schweißmässig verschlossen wird,
**dadurch gekennzeichnet, dass**
- als Element ein Zugelement (5) vorgegebener Knickfestigkeit verwendet wird,
- wobei das Verschweißen des in das Hohlprofil (1) eingeführten Endes (7) des Zugelementes (5) auf der zum Loch (3) des Hohlprofils (1) gegenüberliegeden Innenfläche (6) des Hohlprofils (1) mittels eines mit dem Zugelement (5) außerhalb des Hohlprofils (1) in Kopplung gebrachten Bolzenschweißgerätes bolzenartig erfolgt,
- das Zugelement (5) nach dem Verschweißen seines in das Hohlprofil (1) eingeführten Endes (7) auf der zum Loch (3) des Hohlprofils (1) gegenüberliegenden Innenfläche (6) des Hohlprofils (1) von einer an ihm außerhalb des letzteren angreifenden Spann-/Zugeinrichtung (9) zwischen den einandergegenüberliegenden Innenflächen (6) der Umfangswand (2) des Hohlprofils (1) gespannt
- und auf der Außenfläche (10) der Umfangswand (2) am Rand des Lochs (3) verschweißt wird,
- worauf die außerhalb des Hohlprofils (1) befindliche Länge des Zugelements (5) an dessen Verschweißung (12) auf der Außenfläche (10) der Umfangswand (2) des Hohlprofils (1) abgeschnitten wird.

2. Verfahren nach Anspruch 1, **dadurch gekennzeichnet, dass** als Zugelement (5) ein Zugdraht mit einem rohrförmigen oder sternförmigen Querschnitt verwendet wird.

3. Verfahren nach Anspruch 1 und 2, **dadurch gekennzeichnet, dass** für den Zugdraht (5) ein schweißfähiger Werkstoff verwendet wird, der als Rollenwerkstoff bereitgestellt wird.

4. Verfahren nach Anspruch 3, **dadurch gekennzeichnet, dass** als Werkstoff des Zugdrahtes (5) Stahl verwendet wird.

5. Verfahren nach Anspruch 1 bis 4, **dadurch gekennzeichnet, dass** der knickfeste Zugdraht (5) über eine isolierte Fördereinrichtung (13) durch das Loch (3) in der Umfangswand (2) berührungsfrei zu dieser in das Hohlprofil (1) zum Verschweißen auf der zum Loch (3) gegenüberliegenden Innenfläche (6) der Umfangswand (2) eingeführt wird.

6. Verfahren nach Anspruch 1 bis 5 , **dadurch gekennzeichnet, dass** eine Vielzahl Löcher (2) in der Umfangswand (2) des Hohlprofils (1) erzeugt und eine entsprechende Anzahl Zugelemente (5) als Versteifungsstreben zwischen gegenüberliegenden Innenflächen (6) der Umfangswand (2) des Hohlprofils (1) gespannt und mit der Umfangswand (2) des Hohlprofils (1) entsprechend einem durch eine Simulationsrechnung ermittelten Versteifungsmuster für das Hohlprofil (1) verschweißt werden, wobei die Zugelemente (5) parallel und/oder rechtwinklig und/oder schiefwinklig zueinander ausgerichtet verlaufen.

7. Verfahren nach Anspruch 6, **dadurch gekennzeichnet, dass** die Zugelemente (5) in einer Ebene zwischen den gegenüberliegenden Innenflächen (6) des Hohlprofils (1) in paralleler Ausrichtung zueinander als Versteifungsstreben gespannt und mit der Umfagswand (2) des Hohlprofils (1) verschweißt werden.

8. Hohlprofil, wie ein umfänglich geschlossenes Hohlprofil (1) eines Kfz-Bauteils, mit mindestens einem zwischen einandergegenüberliegenden Innenflächen (6) der Umfangswand (2) des Hohlprofils (1) angeordneten und an den beiden Enden (7; 11) mit der Umfangswand (2) des Hohlprofils (1) verschweißten Element (5) zum Versteifen des Hohlprofils (1),
**dadurch gekennzeichnet, dass**
das Element (5) zum Versteifen des Hohlprofils (1) ein zwischen den einandergegenüberliegenden Innenflächen (6) der Umfangswand (2) des Hohlprofils (11) als Versteifungsstrebe gespanntes Zugelement (5) ist, dessen eines Ende (7) mit einer der Innenflächen (6) der Umfangswand (2) des Hohlprofils (1) und dessen anderes Ende (10) gegenüberliegend an der Außenfläche (9) der Umfangswand (2) des Hohlprofils (1) verschweißt sind.

9. Hohlprofil nach Anspruch 8, **dadurch gekennzeichnet, dass** das Zugelement (5) ein knickfester Zugdraht ist.

10. Hohlprofil nach Anspruch 8 und 9, **dadurch gekennzeichnet, dass** die Querschnittsgeometrie des Zugelementes (5) rohrförmig oder sternförmig ist.

11. Hohlprofil nach einem der Ansprüche 8 bis 10, **dadurch gekennzeichnet, dass** mehrere Zugelemente (5) entsprechend einem durch eine Simulationsrechnung ermittelten Versteifungsmuster für das Hohlprofil (1) zwischen einandergegenüberliegenden Innenflächen (6) der Umfangswand (2) des Hohlprofils (1) parallel und/oder rechtwinklig und/oder schiefwinklig zu einander ausgerichtet, jeweils mit einer entsprechend ermittelten Zugspannung (F) zwischen den jeweiligen einandergegenüberliegenden Innenflächen (6) des Hohlprofils (1) strebenartig gespannt und mit ihren Enden (7; 11) jeweils mit der Umfangswand (2) des Hohlprofils (1) verschweißt sind.

12. Hohlprofil nach Anspruch 11, **dadurch gekennzeichnet, daß** die Zugelemente (5) parallel zueinander ausgerichtet in einer Ebene innerhalb des Hohlprofils (1) strebenartig gespannt und mit ihren Enden (7; 11) jeweils mit der Umfangswand (2) des Hohlprofils(1) verschweißt sind.

## Claims

1. Method for reinforcing a hollow profile, such as a circumferentially closed hollow profile (1) of a motor vehicle component, in which at least one hole (3) is created in the circumferential wall (2) of the hollow profile (1), and an element (5) is introduced through the hole (3) into the hollow profile (1) and positioned between the mutually opposite inner faces (6) of the circumferential wall (2) of the hollow profile (1) for the reinforcement thereof, in that the element (5) is welded with the end (7) introduced into the hollow profile (1) to the inner face (6) of the circumferential face (2) of the hollow profile (1) opposite the hole (3) and at the other end to the edge of the hole (3) of the hollow profile (1), wherein the hole (3) in the circumferential wall (2) is closed by welding,
**characterised in that**
- a tensile element (5) of predefined buckling resistance is used as the element,
- wherein the end (7) of the tensile element (5) introduced into the hollow profile (1) is welded on the inner face (6) of the hollow profile (1) opposite the hole (3) in the hollow profile (1) in a stud-type manner by means of a stud welding machine which is coupled to the tensile element (5) outside the hollow profile (1),
- the tensile element (5), after the end (7) thereof which is introduced into the hollow profile (1) has been welded on the inner face (6) of the hollow profile (1) opposite the hole (3) in the hollow profile (1) is tensioned by a tensioning/pulling means (9) which acts on the hollow profile outside the latter between the mutually opposite inner faces (6) of the circumferential wall (2) of the hollow profile (1)
- and is welded to the edge of the hole (3) on the outer face (10) of the circumferential wall (2),
- whereupon the length of the tensile element (5) situated outside the hollow profile (1) is cut off at the weld (12) thereof on the outer face (10) of the circumferential wall (2) of the hollow profile (1).

2. Method according to Claim 1, **characterised in that** a pull wire with a tubular or star-shaped cross section is used as the tensile element (5).

3. Method according to Claims 1 and 2, **characterised in that** a weldable material, which is provided as a rolled material, is used for the pull wire (5).

4. Method according to Claim 3, **characterised in that** steel is used as the material of the pull wire (5).

5. Method according to Claims 1 to 4, **characterised in that** the buckle-resistant pull wire (5) is introduced by means of an insulated conveying means (13) through the hole (3) in the circumferential wall (2) without touching the latter into the hollow profile (1) for welding on the inner face (6) of the circumferential wall (2) opposite the hole (3).

6. Method according to Claims 1 to 5, **characterised in that** a multiplicity of holes (2) are created in the circumferential wall (2) of the hollow profile (1), and a corresponding number of tensile elements (5) are tensioned as reinforcing braces between opposite inner faces (6) of the circumferential wall (2) of the hollow profile (1) and welded to the circumferential wall (2) of the hollow profile (1) according to a reinforcement pattern for the hollow profile (1) determined by a simulation calculation, wherein the tensile elements (5) run parallel and/or at right angles and/or at oblique angles to each other.

7. Method according to Claim 6, **characterised in that** the tensile elements (5) are tensioned in a plane between the opposite inner faces (6) of the hollow profile (1) in parallel alignment to each other as reinforcing braces and welded to the circumferential wall (2) of the hollow profile (1).

8. Hollow profile, such as a circumferentially closed hollow profile (1) of a motor vehicle component, having at least one element (5) arranged between mutually opposite inner faces (6) of the circumferential wall (2) of the hollow profile (1) and welded at the two ends (7; 11) to the circumferential wall (2) of the hollow profile (1), for reinforcing the hollow profile (1),
**characterised in that**
the element (5) for reinforcing the hollow profile (1) is a tensile element (5) tensioned between the mutually opposite inner faces (6) of the circumferential wall (2) of the hollow profile (1) as a reinforcing brace, one end (7) of which element is welded to one of the inner faces (6) of the circumferential wall (2) of the hollow profile (1), and the other end (10) of which is welded on the opposite side on the outer face (9) of the circumferential wall (2) of the hollow profile (1).

9. Hollow profile according to Claim 8, **characterised in that** the tensile element (5) is a buckle-resistant pull wire.

10. Hollow profile according to Claims 8 and 9, **characterised in that** the cross-sectional geometry of the tensile element (5) is tubular or star-shaped.

11. Hollow profile according to one of Claims 8 to 10, **characterised in that** a plurality of tensile elements (5) are aligned according to a reinforcement pattern for the hollow profile (1) determined by a simulation calculation between mutually opposite inner faces (6) of the circumferential wall (2) of the hollow profile (1) parallel and/or at right angles and/or at oblique angles to each other, each tensioned in a brace-like manner with a correspondingly determined tensile stress (F) between the respective mutually opposite inner faces (6) of the hollow profile (1), and each welded at their ends (7; 11) to the circumferential wall (2) of the hollow profile (1).

12. Hollow profile according to Claim 11, **characterised in that** the tensile elements (5) are tensioned in a brace-like manner parallel to each other in a plane inside the hollow profile (1) and each welded at their ends (7; 11) to the circumferential wall (2) of the hollow profile (1).

## Revendications

1. Procédé pour rigidifier un profilé creux, par exemple un profilé creux (1) fermé sur le pourtour d'un composant automobile, dans lequel au moins un trou (3) est généré dans la paroi périphérique (2) du profilé creux (1) et un élément (5) est introduit par le trou (3) dans le profilé creux (1) et est positionné entre les surfaces intérieures (6) se faisant face de la paroi périphérique (2) du profilé creux (1) pour son renforcement du fait que l'élément (5) est soudé avec l'extrémité (7) introduite dans le profilé creux (1) sur la surface intérieure (6), faisant face au trou (3), de la paroi périphérique (2) du profilé creux (1) et sur l'autre extrémité sur le bord du trou (3) du profilé creux (1), le trou (3) étant fermé par soudage dans la paroi périphérique (2),
**caractérisé en ce**
- **qu'**on utilise comme élément un élément de traction (5) présentant une résistance au flambage prédéfinie,
- le soudage de l'extrémité (7), introduite dans le profilé creux (1), de l'élément de traction (5) s'effectuant à la façon d'un boulon sur la surface intérieure (6), opposée au trou (3) du profilé creux (1), du profilé creux (1) au moyen d'un appareil de soudage à l'arc avec percussion qui est mis en accouplement avec l'élément de traction (5) à l'extérieur du profilé creux (1),
- l'élément de traction (5) est tendu après le soudage de son extrémité (7) introduite dans le profilé creux (1) sur la surface intérieure (6), opposée au trou (3) du profilé creux (1), du profilé creux (1) par un dispositif de tension/traction (9) s'appliquant sur le profilé à l'extérieur de celui-ci entre les surfaces intérieures (6) se faisant face de la paroi périphérique (2) du profilé creux (1)
- et est soudé sur la surface extérieure (10) de la paroi périphérique (2) sur le bord du trou (3),
- après quoi la longueur, se trouvant à l'extérieur du profilé creux (1), de l'élément de traction (5) est coupée sur son soudage (12) sur la surface extérieure (10) de la paroi périphérique (2) du profilé creux (1).

2. Procédé selon la revendication 1, **caractérisé en ce qu'**un fil de traction avec une section présentant une forme tubulaire ou d'étoile est utilisé comme élément de traction (5).

3. Procédé selon les revendications 1 et 2, **caractérisé en ce qu'**un matériau soudable, qui est mis à disposition comme matériau à rouleaux, est utilisé pour le fil de traction (5).

4. Procédé selon la revendication 3, caractérisé en en ce de l'acier est utilisé comme matériau du fil de traction (5).

5. Procédé selon les revendications 1 à 4, **caractérisé en ce que** le fil de traction (5) résistant au flambage est introduit par un système de transport (13) isolé par le trou (3) situé dans la paroi périphérique (2) sans contact jusqu'à celle-ci dans le profilé creux (1) pour le soudage sur la surface intérieure (6), faisant face au trou (3), de la paroi périphérique (2).

6. Procédé selon les revendications 1 à 5, **caractérisé en ce qu'**une pluralité de trous (2) est généré dans la paroi périphérique (2) du profilé creux (1) et un nombre correspondant d'éléments de traction (5) sont tendus comme entretoises de renforcement entre des surfaces intérieures (6) opposées de la paroi périphérique (2) du profilé creux (1) et sont soudés avec la paroi périphérique (2) du profilé creux (1) conformément à un modèle de renforcement déterminé par un calcul de simulation pour le profilé creux (1), les éléments de traction (5) étant positionnés en parallèle et/ou à angle droit et/ou selon un angle oblique les uns par rapport aux autres.

7. Procédé selon la revendication 6, **caractérisé en ce que** les éléments de traction (5) sont tendus dans un plan entre les surfaces intérieures (6) opposées du profilé creux (1) dans une orientation parallèle entre elles comme entretoises de renforcement et sont soudés avec la paroi périphérique (2) du profilé creux (1).

8. Profilé creux, tel qu'un profilé creux (1) fermé sur le pourtour d'un composant de véhicule automobile, comprenant au moins un élément (5) disposé entre des surfaces intérieures (6) se faisant face de la paroi périphérique (2) du profilé creux (1) et soudé sur les deux extrémités (7 ; 11) avec la paroi périphérique (2) du profilé creux (1) pour le renforcement du profilé creux (1),
**caractérisé en ce que**
l'élément (5) pour le renforcement du profilé creux (1) est un élément de traction (5) tendu entre les surfaces intérieures (6) se faisant face de la paroi périphérique (2) du profilé creux (11) comme entretoise de renforcement, élément dont l'une des extrémités (7) est soudé avec l'une des surfaces intérieures (6) de la paroi périphérique (2) du profilé creux (1) et dont l'autre extrémité (10) est soudée en face sur la surface extérieure (9) de la paroi périphérique (2) du profilé creux (1).

9. Profilé creux selon la revendication 8, **caractérisé en ce que** l'élément de traction (5) est un fil de traction résistant au flambage.

10. Profilé creux selon les revendications 8 et 9, **caractérisé en ce que** la géométrie de section de l'élément de traction (5) présente une forme tubulaire ou une forme d'étoile.

11. Profilé creux selon l'une quelconque des revendications 8 à 10, **caractérisé en ce que** plusieurs éléments de traction (5) sont orientés parallèlement et/ou à angle droit et/ou selon un angle oblique les uns par rapport aux autres entre des surfaces intérieures (6) se faisant face de la paroi périphérique (2) du profilé creux (1) conformément à un modèle de renforcement calculé par un calcul de simulation pour le profilé creux (1), sont tenus à chaque fois à la façon d'entretoise avec une tension de traction (F) calculée de façon appropriée entre les surfaces intérieures (6) respectives se faisant face du profilé creux (1) et sont soudés par leurs extrémités (7 ; 11) à chaque fois avec la paroi périphérique (2) du profilé creux (1).

12. Profilé creux selon la revendication 11, **caractérisé en ce que** les éléments de traction (5) sont tendus à la façon d'entretoises, orientés parallèlement entre eux, dans un plan à l'intérieur du profilé creux (1) et sont soudés par chacune de leurs extrémités (7 ; 11) à la paroi périphérique (2) du profilé creux (1).
